# EUROPÄISCHE PATENTSCHRIFT

(11) **EP 2 209 680 B1**
(45) Veröffentlichungstag und Bekanntmachung des Hinweises auf die Patenterteilung: **09.11.2016**
(21) Anmeldenummer: 08804389.8
(22) Anmeldetag: 18.09.2008
(51) Int. Cl.: B60T 8/36

(54) **HYDROAGGREGAT FÜR EINE SCHLUPFREGELBARE HYDRAULISCHE FAHRZEUGBREMSANLAGE**
HYDRAULIC ASSEMBLY FOR A HYDRAULIC VEHICLE BRAKE SYSTEM WITH TRACTION CONTROL
UNITÉ HYDRAULIQUE POUR UN SYSTÈME DE FREINAGE DE VÉHICULE HYDRAULIQUE À RÉGULATION DU GLISSEMENT

(30) Priorität: 02.10.2007 DE 102007047124
(43) Veröffentlichungstag der Anmeldung: 28.07.2010
(73) Patentinhaber: Robert Bosch GmbH, 70442 Stuttgart (DE)
(72) Erfinder: BAREISS, Alexander, 87509 Immenstadt (DE); WEH, Andreas, 87477 Sulzberg (DE); IDEGUCHI, Tomoya, Tokyo 195-0062 (JP)
(86) Internationale Anmeldenummer: PCT/EP2008/062450
(87) Internationale Veröffentlichungsnummer: WO 2009/047099

(56) Entgegenhaltungen:
- WO-A-2004/113142
- DE-A1- 10 053 991
- DE-A1- 10 145 540
- JP-A- 2002 347 595

## Beschreibung

### Stand der Technik

Die Erfindung geht aus von einem Hydroaggregat für eine schlupfregelbare Fahrzeugbremsanlage entsprechend den gattungsbildenden Merkmalen des Anspruchs 1.

Hydroaggregate für schlupfregelbare Fahrzeugbremsanlagen bestehen aus einem Gehäuseblock und einem elektronischen Steuergerät. Der Gehäuseblock weist eine Vielzahl von Ausnehmungen für hydraulische Bauelemente, wie beispielsweise Magnetventile, Pumpen oder Speicher, auf. Ferner sind am Gehäuseblock Anschlüsse für die Radbremsen einer Fahrzeugbremsanlage und für einen Hauptbremszylinder einer Fahrzeugbremsanlage ausgebildet. Bohrungen im Inneren des Gehäuseblocks stellen hydraulische Verbindungen zwischen diesen Aufnahmen her. Die Bauelemente sind üblicherweise in zwei voneinander getrennte Bremskreise miteinander verschaltet. Ein derart ausgebildeter Gehäuseblock ist beispielsweise bekannt aus der DE 102 37 163 A1.

Das erwähnte elektronische Steuergerät wertet Signale aus von Sensoren an den Rädern des Fahrzeugs, welche die jeweils vorherrschenden Schlupfverhältnisse erfassen und von Sensoren am Bremspedal des Hauptbremszylinders, welche dessen Betätigung und den Umfang dieser Betätigung erfassen. Im Steuergerät werden die eingehenden Signale zu Ansteuersignalen weiterverarbeitet. Mit diesen Ansteuersignalen werden unter anderem die Magnetventile im Gehäuseblock angesteuert um in Abhängigkeit der jeweiligen Schlupfverhältnisse an den Rädern des Fahrzeugs den Bremsdruck entsprechend zu regeln.

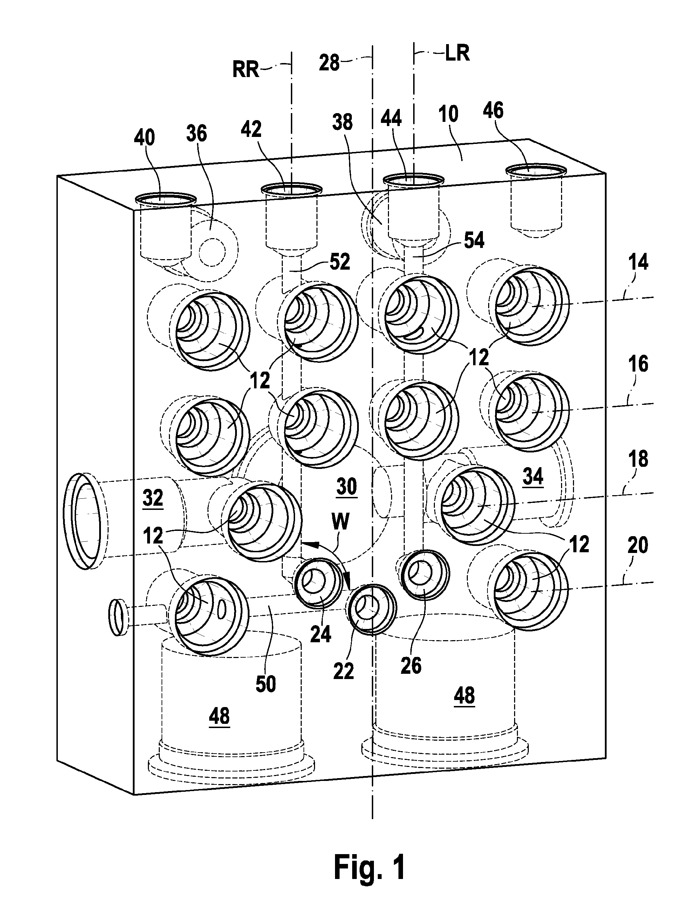

Darüber hinaus ist es bekannt, den Gehäuseblock mit einem einzelnen Drucksensor zu versehen. Dieser Drucksensor erfasst üblicherweise den Druck an einem der Anschlüsse für den Hauptbremszylinder und liefert dem Steuergerät damit ein weiteres Signal zur Steuerung einer Fahrzeugbremsanlage. In der Broschüre "Fahrstabilisierungssysteme" der "Gelben Reihe" der Robert Bosch GmbH, Ausgabe 2004, ist auf Seite 90 in Bild 1 ein in Großserie vertriebenes Hydroaggregat anhand einer Explosionsdarstellung gezeigt. Dieses Hydroaggregat hat einen Drucksensor 9, der abseits einer gedachten Mittelachse durch den Gehäuseblock angeordnet ist.

Nachteilig ist, dass mit einem einzigen Drucksensor keine exakten Rückschlüsse auf die Druckverhältnisse aller hydraulischer Teilbereiche der Fahrzeugbremsanlage möglich sind. Rechen- oder Schätzmodelle auf Basis des einzigen gemessenen Werts bergen ein Fehlerrisiko, das zwangsläufig die Regelgüte derartiger Fahrzeugbremsanlagen verschlechtert.

Gehäuseblöcke eines Hydraulikaggregats mit mehreren hydraulischen Anschlüssen für Drucksensoren sind darüber hinaus bekannt aus der JP 2002 347 595 A und aus der WO 2004/113142A. Der im Dokument JP 2002 347 595 A offenbarte Gegenstand wird als der Erfindung am Nächsten kommend angesehen und zeigt die Merkmale des Oberbegriffs des Anspruchs 1.

Stichbohrungen, Durchgangsbohrungen und Sacklochbohrungen werden in beiden genannten Dokumenten gemeinsam nebeneinander zur hydraulischen Kontaktierung dieser Anschlüsse eingesetzt.
Durchgangsbohrungen haben den Nachteil von jeweils zwei abzudichtenden Schnittstellen zur Umgebung. Ineinander mündende Stichbohrungen sind aufwändig bzw. teuer in der Herstellung, erzeugen aufgrund ihres geknickten Gesamtverlaufs Strömungswiderstände, welche den Durchsatz von Druckmittel, insbesondere bei niedrigen Umgebungstemperaturen, verschlechtern, begrenzen die bestehenden Freiheiten hinsichtlich der Ausbildung und Platzierung anderer hydraulischer Bauelemente am Gehäuseblock und tragen letztlich zur Vergrößerung des Gehäuseblocks bei. Letzteres stellt einen entscheidenden Wettbewerbsnachteil dar. Kundenspezifische Änderungswünsche an einer einmal realisierten Drucksensierung haben großen Einfluss auf das hydraulische Layout des Gehäuseblocks, dessen Fertigungsablauf sowie die hierfür eingesetzten Fertigungseinrichtungen und lassen sich deshalb nur beschränkt, gar nicht oder nur mit erheblichen Aufwand und unter Inkaufnahme von technischen Nachteilen umsetzen.

Aus der Entgegenhaltung DE 101 45 540 A1 ist schließlich eine Drucksensorbaugruppe aus mehreren Drucksensoren, die an einem gemeinsamen Trägergehäuse angeordnet sind, bekannt. Über das Trägergehäuse ist die Drucksensorbaugruppe an einem Drucksteuergerät angebaut und über Druckanschlüsse hydraulisch kontaktiert.

Demgegenüber weist ein Hydroaggregat für eine schlupfregelbare hydraulische Fahrzeugbremsanlage nach Anspruch 1 einen Gehäuseblock auf, bei dem anhand einer zu einem zweiten Anschluss für einen zweiten Drucksensor führenden Sacklochbohrung ein Radbremsanschluss mit einer Aufnahme eines ersten Magnetventils, welches den Druckaufbau in einer Radbremse steuert und mit der Aufnahme eines zweiten Magnetventils, das den Druckabbau dieser Radbremse steuert, verbunden ist. Lediglich eine einzelne Sacklochbohrung reicht demnach aus um eine hydraulische Verbindung zwischen einem Radbremsanschluss, zwei Ventilaufnahmen und einem zweiten Drucksensoranschluss herzustellen. Gegenüber dem nächstliegenden Stand der Technik, bei dem diese hydraulische Verbindung anhand mehrerer Bohrungen ausgeführt ist, ergeben sich dadurch Vorteile hinsichtlich Herstellungsaufwand, Fertigungskosten und Kompaktheit des Hydroaggregats.

Die Drucksensoren sind an einer gemeinsamen Aussenseite des Gehäuseblocks angebracht, wobei diese Aussenseite auch geeignet ist zur Anbringung des elektronischen Steuergeräts. Dies vereinfacht eine Übertragung der Signale der Drucksensoren zur elektronischen Steuerung.

Selbst die Anordnung eines weiteren zweiten Anschlusses für einen zusätzlichen zweiten Drucksensor ist derart darstellbar, ohne die äußeren Abmessungen des Gehäuseblocks vergrößern zu müssen. Kompakte Abmessungen des Gehäuseblocks sind für die Hersteller von Kraftfahrzeugen ein wesentliches Argument, da die in Fahrzeugen zur Verfügung stehenden Einbauräume naturgemäß begrenzt sind.

Weitere Vorteile oder vorteilhafte Weiterbildungen der Erfindung ergeben sich aus den Unteransprüchen oder aus der nachfolgenden Beschreibung.

### Zeichnung

Ein Ausführungsbeispiel der Erfindung ist in der Zeichnung dargestellt und in der nachfolgenden Beschreibung im Detail erläutert. Die einzige Figur zeigt anhand einer perspektivischen Darstellung einen Gehäuseblock eines Hydroaggregats mitsamt seinen Bohrungen und Ausnehmungen in einer bevorzugten Einbaulage.

### Beschreibung des Ausführungsbeispiels

Der in der Figur dargestellte Gehäuseblock 10 eines Hydroaggregats besteht aus einem Quader aus Metall, in den durch spanende Bearbeitung eine Vielzahl von Ausnehmungen eingebracht wurden. Diese Ausnehmungen münden jeweils zu einer der Außenseiten des Gehäuseblocks 10 hin aus und enden im Inneren des Gehäuseblocks 10 sacklochförmig. Die verschiedenen Ausnehmungen sind durch horizontal und vertikal geführte Bohrungen im Inneren des Gehäuseblocks 10 hydraulisch miteinander zu Bremskreisen verschaltet.

Die Figur zeigt den Blick auf die Vorderseite eines Gehäuseblocks 10. Diese Vorderseite kann vorgesehen sein, um daran später das elektronische Steuergerät zu befestigen. An der Vorderseite münden insgesamt zwölf gleichartige kreisrunde Ventilbohrungen 12 aus. Diese Ventilbohrungen 12 sind auf vier, parallel zueinander verlaufende, horizontale Reihen 14, 16, 18, 20 verteilt, die in unterschiedlichen Höhen angeordnet sind. In die Ventilbohrungen 12 werden in einem nachfolgenden Bestückungsprozess Magnetventile eingesetzt.

Weiterhin sind an der Vorderseite des Quaders hydraulische Anschlüsse 22, 24, 26 zu erkennen. Diese Anschlüsse 22 - 26 befinden sich im unteren Drittel des Gehäuseblocks 10. Ein erster Anschluss 22 ist zwischen den beiden Ventilbohrungen 12 der vierten Reihe 20 auf einer vertikal durch den Gehäuseblock 10 verlaufenden Mittelachse 28 angeordnet. Die Anschlüsse 24 und 26 sind gegenüber dem ersten Anschluss 22 erhöht, im Bereich zwischen der dritten Reihe 18 und der vierten Reihe 20 von Ventilbohrungen 12 angeordnet. Diese sogenannten zweiten Anschlüsse 24, 26 sind bezüglich der Mittelachse 28 seitlich versetzt platziert. Sie befinden sich in etwa fluchtend unterhalb der beiden innenliegenden Ventilbohrungen 12. Alle drei Anschlüsse 22 - 26 bilden die Eckpunkte eines gedachten Dreiecks, so dass zwischen dem ersten Anschluss 22 und jeweils einem der zweiten Anschlüssen 24, 26 ein horizontaler und ein vertikaler Abstand besteht. Die Anschlüsse 22 - 26 werden zu einem späteren Zeitpunkt mit Drucksensoren (nicht gezeigt) bestückt.

An der, der Vorderseite gegenüber liegenden und in der Figur nach hinten weisenden Rückseite des Gehäuseblocks 10 ist ein Antriebsraum 30 zu erkennen, welcher zur Aufnahme eines Pumpenantriebs vorgesehen ist. Dieser Antriebsraum 30 befindet sich in der Figur oberhalb der beiden zweiten Anschlüsse 24 und 26 für Drucksensoren, ungefähr auf Höhe der dritten Reihe 18 der Ventilbohrungen 12. Zu beiden Seiten dieses Antriebsraums 30 erstrecken sich Pumpenbohrungen 32, 34. Diese fluchten zueinander und verlaufen in horizontaler Richtung durch den Gehäuseblock 10. Die Pumpenbohrungen 32, 34 münden zur linken bzw. rechten Außenseite des Gehäuseblocks 10 hin aus und sind vorgesehen zur Aufnahme nicht dargestellter Pumpenelemente, die vom ebenfalls nicht gezeigten Pumpenantrieb zu einer hin- oder hergehenden Hubbewegung angetrieben werden.

Zur Rückseite des Gehäuseblocks 10 münden weiterhin zwei Hauptbremszylinderanschlüsse 36, 38 aus. Letztere befinden sich unmittelbar unterhalb der Oberseite des Gehäuseblocks 10. Anhand dieser Hauptbremszylinderanschlüsse 36, 38 wird eine hydraulische Leitungsverbindung des Hydroaggregats mit einem Hauptbremszylinder zur Betätigung einer Fahrzeugbremsanlage durch den Fahrer hergestellt.

An der Oberseite des Gehäuseblocks 10 sind nebeneinander liegend, vier Radbremszylinderanschlüsse 40, 42, 44, 46 vorgesehen. Sie dienen zum Anschluss von Bremsleitungen, welche die Radbremsen einer Fahrzeugbremsanlage mit dem Hydroaggregat verbinden. Die beiden innenliegenden Radbremszylinderanschlüsse 42 und 44 sind beispielsweise mit den Radbremsen rechts hinten (RR) und links hinten (LR) des Fahrzeugs kontaktiert.

An der zur Oberseite gegenüberliegenden Unterseite des Gehäuseblocks 10 sind schließlich noch zwei Speicherkammern 48 zu erkennen, die jeweils einem der Bremskreise einer Fahrzeugbremsanlage zugeordnet sind.

Bezüglich der Bohrungen im Gehäuseblock 10 zur hydraulischen Verknüpfung der erläuterten Ausnehmungen untereinander wird nachfolgend nur insoweit eingegangen, wie es für das Verständnis der Erfindung erforderlich ist. Diese Bohrungen verlaufen aus fertigungstechnischen Gründen horizontal oder vertikal im Gehäuseblock 10. Nicht explizit erläuterten Bohrungen, deren funktionsbedingte Platzierung und Ausbildung am Gehäuseblock 10 zählt zum allgemeinen Stand der Technik und soll deshalb nicht beschrieben werden.

Für die Erfindung wesentlich ist unter anderem die nachfolgend erläuterte hydraulische Kontaktierung der Anschlüsse 22 - 26 für die Drucksensoren. Diese erfolgt durch jeweils eine, einem der Anschlüsse 22, 24, 26 zugeordnete Sacklochbohrung 50, 52, 54. Alle Sacklochbohrungen 50 - 54 verlaufen in einer gemeinsamen Schnittebene durch den Gehäuseblock 10. Die zugeordneten Anschlüsse 22 - 26 für die Drucksensoren befinden sich jeweils in der Umgebung des innenliegenden geschlossenen Endes einer der Sacklochbohrungen 50 - 54.

Der auf der vertikalen Mittelachse 28 durch den Gehäuseblock 10 angeordnete erste Anschluss 22 ist durch eine erste, horizontal ausgerichtete und zu der in der Figur linken Außenseite des Gehäuseblocks 10 hin ausmündende erste Sacklochbohrung 50 kontaktiert. Diese erste Sacklochbohrung 50 durchdringt eine Ventilaufnahmebohrung 12 in der untersten, vierten Reihe 20. Diese Ventilbohrung 12 ist zur Aufnahme eines sogenannten Umschaltventils vorgesehen. Umschaltventile haben innerhalb einer Fahrzeugbremsanlage die Funktion, eine bestehende hydraulische Verbindung von einem der Hauptbremszylinderanschlüsse 36, 38 zu den Radbremsanschlüssen 40 - 46 eines zugeordneten Bremskreises der Fahrzeugbremsanlage zu steuern. Der am ersten Anschluss 22 anzuordnende erste Drucksensor ist demnach in der Lage das am Hauptbremszylinderanschluss 36 vorherrschende Druckniveau zu sensieren.

Im Verlauf der weiteren Montage des Hydroaggregats wird die erste Sacklochbohrung 50 zur Umgebung hin verschlossen. Dazu wird üblicherweise eine Kugel verwendet, die im Mündungsbereich der Sacklochbohrung 50 in den Gehäuseblock 10 eingepresst wird.

Die beiden zweiten Anschlüsse 24 und 26 für Drucksensoren sind über jeweils eine zweite Sacklochbohrung 52, 54 hydraulisch versorgt. Diese zweiten Sacklochbohrungen 52, 54 verlaufen parallel zueinander in vertikaler Richtung. Sie sind mit beidseitigem Abstand zur Mittelachse 28 des Gehäuseblocks 10 angeordnet und schließen damit einen rechten Winkel W mit der zum ersten Anschluss 22 führenden ersten Sacklochbohrung 50 ein. Die zweiten Sacklochbohrungen 52, 54 münden die beiden innenliegenden Radbremsanschlüsse 42, 44 an der Oberseite des Gehäuseblocks 10 und durchqueren jeweils zwei untereinander angeordnete Ventilbohrungen 12 der ersten Reihe 14 und der zweiten Reihe 16. In der ersten, der Oberseite des Gehäuseblocks 10 zugewandten Reihe 14 von Ventilbohrungen 12 werden Magnetventile eingebaut, über die in den Radbremsen ein Druckaufbau steuerbar ist, während sich in der darunter liegenden zweiten Reihe 16 diejenigen Magnetventile befinden, über die ein Druckabbau in der entsprechenden Radbremse erfolgt. Die den zweiten Anschlüssen 24, 26 zugeordneten Drucksensoren erfassen somit die Druckverhältnisse an Radbremsen die vorzugsweise unterschiedlichen Bremskreisen der Fahrzeugbremsanlage angehören.

Wie erläutert ist bei der beschriebenen Ausführungsvariante der Erfindung, der erste Anschluss 22 für einen Drucksensor mit dem Anschluss 36 des Hauptbremszylinders verbunden, während die beiden zweiten Anschlüsse 24, 26 an die Radbremsen unterschiedlicher Bremskreise angeschlossen sind.

Selbstverständlich müssen nicht alle drei Anschlüsse 22, 24, 26 für Drucksensoren vorgesehen werden. Vielfach lässt sich bereits mit einem einzigen zweiten Anschluss 24 oder 26 für einen Drucksensor eine für den Einsatzfall genügende Verbesserung der Regelgüte einer Fahrzeugbremsanlage erreichen.

Weitere Änderungen oder Ergänzungen am beschriebenen Ausführungsbeispiel sind möglich, ohne vom Grundgedanken der Erfindung abzuweichen.

## Patentansprüche

1. Hydroaggregat für eine schlupfregelbare hydraulische Fahrzeugbremsanlage, mit einem Gehäuseblock (10), mit am Gehäuseblock (10) vorgesehenen Aufnahmen (12; 32; 34) für hydraulische Bauelemente zur Regelung des Bremsdrucks an den Radbremsen einer Fahrzeugbremsanlage, wie beispielsweise Pumpen, Magnetventile und Speicher, mit druckmittelführenden und die Aufnahmen (12; 32; 34) zu wenigstens einem Bremskreis verschaltenden Bohrungen und mit hydraulischen Anschlüssen (40 - 46) für die Radbremsen der Fahrzeugbremsanlage, für einen Hauptbremszylinder (36, 38) der Fahrzeugbremsanlage und für einen, den hydraulischen Druck in einem hydraulischen Teilbereich der Fahrzeugbremsanlage erfassenden ersten Drucksensor, wobei am Gehäuseblock (10) wenigstens ein zweiter hydraulischer Anschluss (24; 26) für einen zweiten Drucksensor ausgebildet ist und wobei die hydraulischen Anschlüsse (22 - 26) der Drucksensoren jeweils am innen liegenden, geschlossenen Ende einer druckmittelführenden Sacklochbohrung (50 - 54) angeordnet sind,
wobei jeweils einem der Anschlüsse (22 - 26) jeweils eine Sacklochbohrung (50 - 54) zugeordnet ist und wobei die Sacklochbohrung (52; 54) zum zweiten Anschluss (24; 26) für den zweiten Drucksensor einen Radbremsanschluss (40; 42; 44; 46) mit der Aufnahme (12) eines ersten Magnetventils verbindet, welches den Druckaufbau in einer Radbremse steuert, **dadurch gekennzeichnet,**
**dass** die Sacklochbohrung (52; 54) zum zweiten Anschluss (24; 26) für den zweiten Drucksensor den Radbremsanschluss (40; 42; 44; 46) mit der Aufnahme (12) eines zweiten Magnetventils verbindet, das den Druckabbau dieser Radbremse steuert.

2. Hydroaggregat nach Anspruch 1, **dadurch gekennzeichnet, dass** der erste Anschluss (22) für den ersten Drucksensor auf einer Mittelachse (28) durch den Gehäuseblock (10) platziert ist, welche parallel zueinander verlaufende Reihen (14, 16, 18, 20) von Ventilbohrungen (12) jeweils senkrecht schneidet und dass der wenigstens eine zweite Anschluss (24, 26) gegenüber dem ersten Anschluss (22) mit Abstand in Richtung der Mittelachse (28) und mit Abstand in Verlaufsrichtung der Reihen (14, 16, 18, 20) von Ventilbohrungen (12) am Gehäuseblock (10) angeordnet ist.

3. Hydroaggregat nach Anspruch 2, **dadurch gekennzeichnet, dass** der erste Anschluss (22) für den ersten Drucksensor bezüglich des zweiten Anschlusses (24, 26) für den zweiten Drucksensor von den Radbremsanschlüssen (40 - 46) der Fahrzeugbremsanlage abgewandt angeordnet ist.

4. Hydroaggregat nach Anspruch 2 oder 3, **dadurch gekennzeichnet, dass** die Sacklochbohrungen (50 - 54) zur hydraulischen Kontaktierung der Anschlüsse (22 - 26) der Drucksensoren in einer gemeinsamen Schnittebene durch den Gehäuseblock (10) verlaufen und in Richtung der Mittelachse (28) oder in Verlaufsrichtung der Reihen (14, 16, 18, 20) von Ventilbohrungen (12) ausgerichtet sind.

5. Hydroaggregat nach einem der Ansprüche 2 bis 4, **dadurch gekennzeichnet, dass** die Sacklochbohrung (50) zur Kontaktierung des Anschlusses (22) des ersten Drucksensors und die Sacklochbohrung (52; 54) zur Kontaktierung des Anschlusses (24; 26) des zweiten Drucksensors miteinander einen im Wesentlichen rechten Winkel (W) einschließen.

6. Hydroaggregat nach einem der Ansprüche 1 bis 5, **dadurch gekennzeichnet, dass** die Anschlüsse (22 - 26) der Drucksensoren zu einer gemeinsamen Außenseite des Gehäuseblocks (10) hin ausmünden.

7. Hydroaggregat nach Anspruch 6, **dadurch gekennzeichnet, dass** an der gemeinsamen Außenseite des Gehäuseblocks (10) die Ventilbohrungen (12) der Magnetventile ausmünden.

8. Hydroaggregat nach einem der Ansprüche 1 bis 7, **dadurch gekennzeichnet, dass** der erste Anschluss (22) für den ersten Drucksensor hydraulisch verbunden ist mit einem der Anschlüsse (36; 38) des Hauptbremszylinders am Gehäuseblock (10) und dass der wenigstens eine zweite Anschluss (24; 26) für den zweiten Drucksensor mit einem Radbremsanschluss (40; 42; 44; 46) des Gehäuseblocks (10) kontaktiert ist.

## Claims

1. Hydraulic assembly for a controllable-slip hydraulic vehicle brake system, having a housing block (10), having receptacles (12; 32; 34) which are provided on the housing block (10) for hydraulic components for regulating the brake pressure at the wheel brakes of a vehicle brake system, such as pumps, solenoid valves and accumulators, having bores which conduct pressure medium and connect the receptacles (12; 32; 34) to at least one brake circuit, and having hydraulic connectors (40-46) for the wheel brakes of the vehicle brake system, for a brake master cylinder (36, 38) of the vehicle brake system and for a first pressure sensor which detects the hydraulic pressure in a hydraulic part region of the vehicle brake system, at least one second hydraulic connector (24; 26) for a second pressure sensor being configured on the housing block (10), and the hydraulic connectors (22-26) of the pressure sensors being arranged in each case at the inner, closed end of a blind bore (50-54) which conducts pressure medium, in each case one of the connectors (22-26) being assigned in each case one blind bore (50-54), and the blind bore (52; 54) to the second connector (24; 26) for the second pressure sensor connecting a wheel brake connector (40; 42; 44; 46) to the receptacle (12) of a first solenoid valve which controls the build-up of pressure in a wheel brake, **characterized in that** the blind bore (52; 54) to the second connector (24; 26) for the second pressure sensor connects the wheel brake connector (40; 42; 44; 46) to the receptacle (12) of a second solenoid valve which controls the dissipation of pressure of the said wheel brake.

2. Hydraulic assembly according to Claim 1, **characterized in that** the first connector (22) for the first pressure sensor is placed on a centre axis (28) through the housing block (10), which centre axis (28) in each case perpendicularly intersects rows (14, 16, 18, 20) of valve bores (12) which run parallel to one another, and **in that** the at least one second connector (24, 26) is arranged on the housing block (10) at a spacing in the direction of the centre axis (28) with respect to the first connector (22) and at a spacing in the running direction of the rows (14, 16, 18, 20) of valve bores (12).

3. Hydraulic assembly according to Claim 2, **characterized in that** the first connector (22) for the first pressure sensor is arranged so as to face away from the wheel brake connectors (40-46) of the vehicle brake system with regard to the second connector (24, 26) for the second pressure sensor.

4. Hydraulic assembly according to Claim 2 or 3, **characterized in that** the blind bores (50-54) for making hydraulic contact with the connectors (22-26) of the pressure sensors run in a common sectional plane through the housing block (10) and are oriented in the direction of the centre axis (28) or in the running direction of the rows (14, 16, 18, 20) of valve bores (12).

5. Hydraulic assembly according to one of Claims 2 to 4, **characterized in that** the blind bore (50) for making contact with the connector (22) of the first pressure sensor and the blind bore (52; 54) for making contact with the connector (24; 26) of the second pressure sensor enclose substantially a right angle (W) between one another.

6. Hydraulic assembly according to one of Claims 1 to 5, **characterized in that** the connectors (22-26) of the pressure sensors open towards a common outer side of the housing block (10).

7. Hydraulic assembly according to Claim 6, **characterized in that** the valve bores (12) of the solenoid valves open on the common outer side of the housing block (10).

8. Hydraulic assembly according to one of Claims 1 to 7, **characterized in that** the first connector (22) for the first pressure sensor is connected hydraulically to one of the connectors (36; 38) of the brake master cylinder on the housing block (10), and **in that** the at least one second connector (24; 26) for the second pressure sensor makes contact with a wheel brake connector (40; 42; 44; 46) of the housing block (10).

## Revendications

1. Unité hydraulique pour un système de freinage hydraulique de véhicule à régulation de glissement, comprenant un bloc boîtier (10), avec des logements (12 ; 32 ; 34) prévus sur le bloc boîtier (10) pour des composants hydrauliques pour la régulation de la pression de freinage au niveau des freins de roue d'un système de freinage de véhicule, comme par exemple des pompes, des électrovannes et des accumulateurs, avec des alésages guidant du fluide sous pression et reliant les logements (12 ; 32 ; 34) à au moins un circuit de freinage et avec des raccords hydrauliques (40 - 46) pour les freins de roue du système de freinage de véhicule, pour un cylindre de frein principal (36, 38) du système de freinage de véhicule et pour un premier capteur de pression détectant la pression hydraulique dans une région partielle hydraulique du système de freinage de véhicule, au moins un deuxième raccord hydraulique (24 ; 26) étant réalisé sur le bloc boîtier (10) pour un deuxième capteur de pression et les raccords hydrauliques (22 - 26) des capteurs de pression étant disposés à chaque fois à l'extrémité fermée située à l'intérieur d'un alésage borgne conduisant du fluide sous pression (50 - 54),
un alésage borgne (50 - 54) étant chaque fois associé à l'un respectif des raccords (22 - 26) et l'alésage borgne (52 ; 54) pour le deuxième raccord (24, 26) pour le deuxième capteur de pression reliant un raccord de frein de roue (40 ; 42 ; 44 ; 46) au logement (12) d'une première électrovanne qui commande l'augmentation de pression dans un frein de roue, **caractérisée en ce que** l'alésage borgne (52 ; 54) pour le deuxième raccord (24 ; 26) pour le deuxième capteur de pression relie les raccords de frein de roue (40 ; 42 ; 44 ; 46) au logement (12) d'une deuxième électrovanne qui commande la diminution de pression de ce frein de roue.

2. Unité hydraulique selon la revendication 1, **caractérisée en ce que** le premier raccord (22) pour le premier capteur de pression est placé sur un axe médian (28) à travers le bloc boîtier (10), lequel coupe à chaque fois perpendiculairement des rangées d'alésages de soupape (12) s'étendant parallèlement les unes aux autres (14, 16, 18, 20) et **en ce que** l'au moins un deuxième raccord (24, 26) est disposé par rapport au premier raccord (22) à distance dans la direction de l'axe médian (28) et à distance dans la direction d'étendue des rangées (14, 16, 18, 20) d'alésages de soupape (12) sur le bloc boîtier (10).

3. Unité hydraulique selon la revendication 2, **caractérisée en ce que** le premier raccord (22) pour le premier capteur de pression est disposé par rapport au deuxième raccord (24, 26) pour le deuxième capteur de pression de manière détournée des raccords de frein de roue (40 - 46) du système de freinage de véhicule.

4. Unité hydraulique selon la revendication 2 ou 3, **caractérisée en ce que** les alésages borgnes (50 - 54) pour le contact hydraulique des raccords (22 - 26) des capteurs de pression s'étendent dans un plan de coupe commun à travers le bloc boîtier (10) et sont orientés dans la direction de l'axe médian (28) ou dans la direction d'étendue des rangées (14, 16, 18, 20) d'alésages de soupape (12).

5. Unité hydraulique selon l'une quelconque des revendications 2 à 4, **caractérisée en ce que** l'alésage borgne (50) pour le contact du raccord (22) du premier capteur de pression et l'alésage borgne (52 ; 54) pour le contact du raccord (24 ; 26) du deuxième capteur de pression forment ensemble un angle essentiellement droit (W).

6. Unité hydraulique selon l'une quelconque des revendications 1 à 5, **caractérisée en ce que** les raccords (22 - 26) des capteurs de pression débouchent vers un côté extérieur commun du bloc boîtier (10).

7. Unité hydraulique selon la revendication 6, **caractérisée en ce que** les alésages de soupape (12) des électrovannes débouchent au niveau du côté extérieur commun du bloc boîtier (10).

8. Unité hydraulique selon l'une quelconque des revendications 1 à 7, **caractérisée en ce que** le premier raccord (22) pour le premier capteur de pression est connecté hydrauliquement à l'un des raccords (36 ; 38) du cylindre de frein principal au niveau du bloc boîtier (10) et **en ce que** l'au moins un deuxième raccord (24 ; 26) pour le deuxième capteur de pression peut être mis en contact avec un raccord de frein de roue (40 ; 42 ; 44 ; 46) du bloc boîtier (10).
